# EUROPÄISCHE PATENTSCHRIFT

(11) **EP 1 682 462 B1**
(45) Veröffentlichungstag und Bekanntmachung des Hinweises auf die Patenterteilung: **16.07.2008**
(21) Anmeldenummer: 04765785.3
(22) Anmeldetag: 04.10.2004
(51) Int. Cl.: C04B 24/26, C04B 28/00

(54) **REDISPERGIERBARE DISPERSIONSPULVER FÜR WÄRMEDÄMM-VERBUNDSYSTEME**
REDISPERSIBLE DISPERSION POWDERS FOR HEAT INSULATING COMPOSITE SYSTEM
POUDRE DE DISPERSION REDISPERSIBLE DESTINEE A DES SYSTEMES COMPOSITES CALORIFUGES

(30) Priorität: 31.10.2003 DE 10351334
(43) Veröffentlichungstag der Anmeldung: 26.07.2006
(73) Patentinhaber: Elotex AG, 6203 Sempach Station (CH)
(72) Erfinder: KLEIN, Heinz-Peter, 55130 Mainz (DE); SCHOTTLER, Michael, 65474 Bischofsheim (DE)
(74) Vertreter: Ackermann, Joachim
(86) Internationale Anmeldenummer: PCT/EP2004/011044
(87) Internationale Veröffentlichungsnummer: WO 2005/047204

(56) Entgegenhaltungen:
- EP-A1- 1 238 958
- EP-A2- 1 262 465

## Beschreibung

Die Erfindung betrifft die Verwendung von in Wasser redispergierbaren Dispersionspulvem auf Basis von carbonylgruppenhaltigen Copolymerisaten als Bindemittel in Wärmedämm-Verbundsystemen.

Homo- und Copolymerisate werden seit vielen Jahren gerade im Bausektor als Kunststoffvergütung von hydraulisch abbindenden Systemen, bevorzugt in Form von Dispersionspulvem, eingesetzt. Eine Übersicht über die Wirkung von Dispersionspulvern in solchen Baustoffen findet sich in der Zeitschrift Tonindustrie TIZ 9, 1985, S. 698. Durch den Zusatz von Dispersionspulvern können Eigenschaften von hydraulisch abbindenden Systemen, wie Abriebbeständigkeit, Biegezugfestigkeit, Kratzfestigkeit und insbesondere Haftung zu kritischen Kontaktflächen, wie gesinterte Fliesen und Kunststoffen, signifikant verbessert werden. Schaumkunststoffe, in Form von z.B. expandierten Polystyrolplatten, kommen speziell in Wärmedämm-Verbundsystemen zur Erzielung des gewünschten thermischen Isoliereffekts zum Einsatz. Die Verklebung der Schaumkunststoffe (Wärmedämmstoffe) erfolgt mittels Spachtelmassen, welche häufig Dispersionspulver enthalten, die auf Homo- und Copolymerisaten ohne funktionelle Gruppen basieren. Nachteilig ist, dass Verklebungen mit derartigen Spachtelmassen relativ niedrige Haftzugfestigkeiten zwischen Spachtelmasse und Wärmedämmstoff, insbesondere nach Wasserbelastung (Nasshaftung), aufweisen. Wünschenswert für Wärmedämm-Verbundkleber sind allerdings Haftzugfestigkeiten, die sich, unabhängig von der klimatischen Beanspruchung der Verklebungen, also trocken oder nass, auf einem konstanten und hohen Niveau befinden.

In EP 1 238 958 A1 sind Trockenmörtel beschrieben, die sich als Bauklebemittel von Wärmedämmplatten eignen. Die beschriebenen Trockenmörtel basieren auf redispergierbaren Dispersionspulvern die als Basispolymer insbesondere Ester-, Thioester- und Amid-verknüpfte Copolymere beinhalten. In EP 1 262 465 A2 wird die Verwendung von Vinylester- bzw. (Meth)acrylsäureester-Mischpolymerisaten in Baustoffen beschrieben, die eine Vielzahl weiterer Comonomere enthalten können.

In EP 1 148 038 ist die Verwendung von in Wasser redispergierbaren Polymerpulvern auf Basis von Vinylester-Polymerisaten in Baukleber-Zusammensetzungen, unter anderem auch in Wärmedämm-Verbundklebstoffen, beschrieben. Die Polymerisate sind dadurch charakterisiert, dass sie hydrophile Comonomere mit z. B. Carboxyl-, Amid-, Nitril- und Sulfonsäuregruppen, in Mengen von 0,2 bis 1,5 Gew.-% , bezogen auf das Gesamtgewicht der Polymerisate, enthalten. Durch Einsatz der hydrophilen Comonomeren ergeben sich für die erwähnten Baukleber bessere Haftzugfestigkeiten, auch nach Nasslagerung. Der Einsatz von hydrophoben Comonomeren mit funktionellen Gruppen ist in der genannten Patentschrift nicht erwähnt.

In EP 0 894 822 wird eine vernetzbare, in Wasser redispergierbare Pulverzusammensetzung beansprucht, die auf wasserunlöslichen Polymerisaten mit funktionellen (vernetzbaren) Gruppen, wasserlöslichen Polymeren und in Salzform vorliegenden Vernetzern basiert. Die wasserunlöslichen Polymerisate enthalten funktionelle Comonomere mit Substituenten, die aus der Gruppe der Aldehyd-, Keto-, Epoxid-, Isocyanat-, Carbonsäureanhydrid- und Aziridin-Gruppen ausgewählt sind. Die bevorzugten Comonomeren zeichnen sich alle durch eine schlechte Wasserlöslichkeit aus und können dementsprechend als hydrophob charakterisiert werden. Hinweise auf die Verwendung der beanspruchten Pulverzusammensetzung in Wärmedämm-Verbundsystemen sind in der genannten Schrift nicht gegeben.

Es bestand daher die Aufgabe ein in Wasser redispergierbares, filmbildendes Dispersionspulver mit verbesserten Haftungseigenschaften, speziell hinsichtlich Nasshaftung, für den Einsatz als Bindemittel in Wärmedämm-Verbundsystemen bereitzustellen.

Diese Aufgabe konnte durch die Verwendung eines in Wasser redispergierbaren Dispersionspulvers gemäß Anspruch 1 auf Basis von, ein oder mehreren, mit mindestens einem Schutzkolloid-stabilisierten, Copolymerisaten, enthaltend Monomeren mit einer oder mehreren Carbonylgruppen, gelöst werden, wobei die carbonylgruppenhaltigen Monomere mindestens eine Carbonylgruppe ausgewählt aus der Gruppe der Aldehyd-und/oder Ketogruppen umfasst.

Insbesondere hat sich die Verwendung von carbonylgruppenhaltigen Monomeren bewährt, die sich von α,β- ungesättigten Verbindungen (endständig ungesättigt) ableiten.

Bevorzugte Monomere sind α,β-ungesättigte (C₃-C₂₅)-Aldehyde der Formel (I), 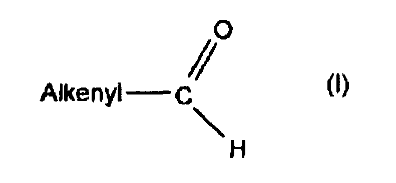 wobei der Alkenylrest für einen ein oder mehrfach ungesättigten linearen oder verzweigten Rest mit 2 bis 24 Kohlenstoffatomen steht oder
α,β-ungesättigte (C₄-C₂₅)-Keton der Formel (II), 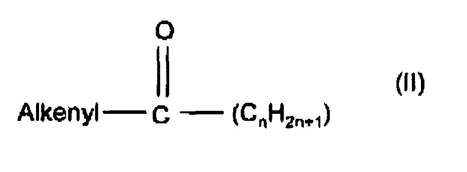 wobei n für eine ganze Zahl zwischen 1 und 12 stehen und wobei der Alkenylrest für einen ein oder mehrfach ungesättigten linearen oder verzweigten Rest mit 2 bis 23 Kohlenstoffatomen steht oder
α,β-ungesättigte Verbindungen der Formel (III), 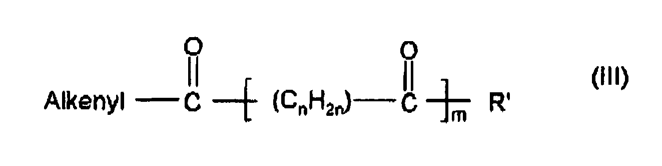 wobei m für eine ganze Zahl zwischen 1 und 10 und n für jede Einheit m unabhängig voneinander für eine ganze Zahl zwischen 1 und 12 steht und worin Alkenyl für einen ein oder mehrfach ungesättigten linearen oder verzweigten Rest mit 2 bis 24 Kohlenstoffatomen und R' für H oder einen (C₁-C₁₂)-Alkylrest steht oder
α,β-ungesättigte Verbindungen der Formel (IV), 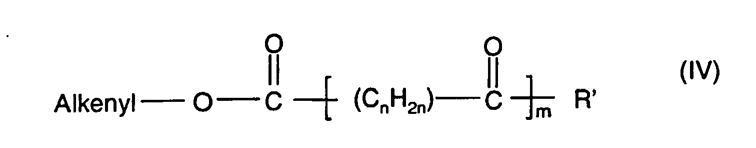 wobei m für eine ganze Zahl zwischen 1 und 10 und n für jede Einheit m unabhängig voneinander für eine ganze Zahl zwischen 1 und 12 steht und worin Alkenyl für einen ein oder mehrfach ungesättigten linearen oder verzweigten Rest mit 2 bis 24 Kohlenstoffatomen und R' für H oder einen (C₁-C₁₂)-Alkylrest steht oder
α,β-ungesättigte Verbindungen der Formel (V), 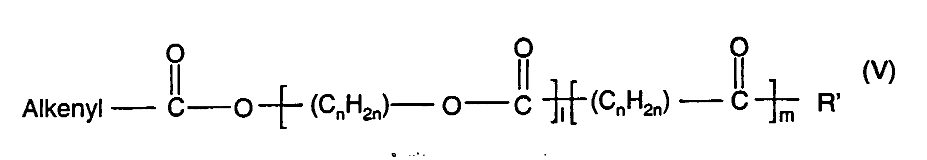 wobei I für 0 oder 1 steht, m eine ganze Zahl zwischen 1 und 10 ist und für jede (CₙH₂ₙ)-Gruppe unabhängig voneinander eine ganze Zahl zwischen 1 und 12 darstellt und worin Alkenyl für einen ein oder mehrfach ungesättigten linearen oder verzweigten Rest mit 2 bis 24 Kohlenstoffatomen und R' für H oder einen (C₁-C₁₂)-Alkylrest steht oder
α,β-ungesättigte Verbindungen der Formel (VI) oder (VII), 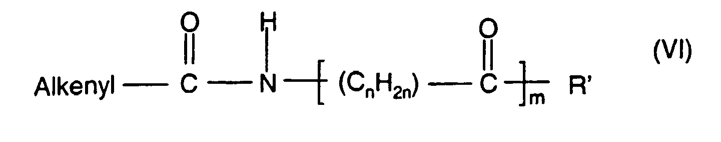 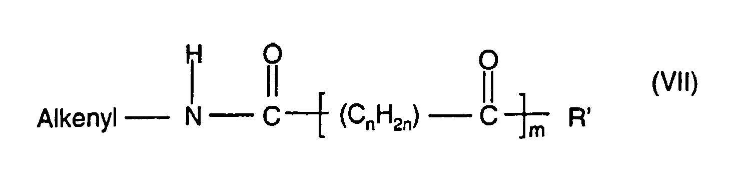 wobei m eine ganze Zahl zwischen 1 und 10 ist und für jede (CₙH₂ₙ)-Gruppe unabhängig voneinander eine ganze Zahl zwischen 1 und 12 darstellt und worin Alkenyl für einen ein oder mehrfach ungesättigten linearen oder verzweigten Rest mit 2 bis 24 Kohlenstoffatomen und R' für H oder einen (C₁-C₁₂)-Alkylrest steht. In den Formeln (II) bis (VII) können die (CₙH₂ₙ)- bzw (CₙH₂ₙ₊₁)-Gruppen linear oder verzweigt sein.

Als aldedhyd- und ketofunktionelle Monomereinheiten kommen bevorzugt Acrolein, Vinyl- oder Allylacetoacetat, acetoacetylierte Hydroxyalkyl(meth)acrylate, wie z. B. Acetoacetoxyethylacrylat, Acetoacetoxyethylmethacrylat, Diacetonacrylamid sowie Vinylmethlylketon bei der Herstellung der erfindungsgemäßen Copolymerisate zum Einsatz. Vorzugsweise beträgt die Menge dieser funktionellen Comonomeren 0,1 bis 15 Gew.-%, besonders bevorzugt 0,5 bis 10 Gew.-%, insbesondere mehr als 2 Gew.-% bezogen auf das Gesamtgewicht des Polymerisats.

Als Basismonomere für die erfindungsgemäßen Copolymerisate kommen die bekannten Vinylester in Frage, insbesondere Vinylester von linearen und verzweigten Monocarbonsäuren bevorzugt mit 2 bis 15 Kohlenstoffatomen. Beispiele sind Vinylacetat, Vinylpropionat, Vinylbutyrat, Vinylpivalat, Vinyl-2-ethylhexanoat, Vinyllaurat, Vinylester von ®Versatic-Säure 9, 10 oder 11 (α,α'-Dialkyl-verzweigte Monocarbonsäuren, Handelsname ®VeoVa, Hersteller: Resolution).

Darüber hinaus sind ebenfalls Vinylaromaten, bevorzugt Styrol, Methylstyrol oder Vinyltoluol als Basismonomere geeignet.

Weiterhin sind Fumar- und Maleinsäuremono- und -diester als Basismonomere geeignet, vorzugsweise sind hier Ester von einwertigen aliphatischen Alkoholen mit 1 bis 12 Kohlenstoffatomen, beispielsweise deren Diethyl-, Diisopropyl-, Dibutyl-, Dihexyl- und Dioctylester, zu nennen.

Weitere geeignete Basismonomere sind Methacrylsäure- und Acrylsäureester insbesondere von linearen und verzweigten Alkoholen, bevorzugt mit 1 bis 12 Kohlenstoffatomen. Besonders bevorzugt sind beispielsweise Methylacrylat, Ethylacrylat, Butylacrylat, 2-Ethylhexylacrylat, sowie Methylmethacrylat, Ethylmethacrylat, Butylmethacrylat und 2-Ethylhexylmethacrylat.

Die erfindungsgemäßen Copolymerisaten können Methacryl- bzw. Acrylsäureester enthalten, die mit Epoxidgruppen oder Hydroxylgruppen modifiziert sind, vorzugsweise Glycidylmethacrylat, Hydroxyethylmethacrylat, Hydroxyethylacrylat, Hydroxypropylacrylat, Hydroxypropylmethacrylat. Der Anteil dieser Comonomere kann 0 bis 5 Gew.%, vorzugsweise 0 bis 2 Gew.%, bezogen auf die Gesamtmenge der eingesetzten Monomeren, betragen.

Die erfindungsgemäßen Copolymerisate können neben den aufgeführten Monomereinheiten außerdem ein oder mehrfach ungesättigte olefinische Verbindungen wie (C₂-C₁₂)- Olefine, bevorzugt (C₂-C₁₂)-α-Olefine, beispielsweise Ethylen, Propylen, Isobutylen, (C₃-C₁₂)-Diene, beispielsweise Butadien, Isopren, Vinylether, beispielsweise Vinylethylether, Vinyl-n-butylether, sowie Acrylnitril, Methacrylnitril, Vinylchlorid, N-Vinylpyrrolidon, enthalten.

Gegebenenfalls können noch weitere funktionelle Comonomere copolymerisiert werden. Beispiele hierfür sind Comonomere aus der Gruppe der ethylenisch ungesättigten Mono- und Dicarbonsäuren, deren Anhydride und Amide, wie Fumar-und Maleinsäure sowie Acryl- und Methacrylsäure sowie deren Anhydride und Amide, wie Acrylamid, Methacrylamid, N-Methylolacrylamid, N-Methylolmethacrylamid sowie deren Isobutoxyether oder n-Butoxyether, ethylenisch ungesättigte Sulfonsäuren bzw. deren Salze, wie 2-Acrylamido-2-methyl-propansulfonat und Vinylsulfonsäure. Der Anteil dieser Comonomere beträgt 0 bis 2 Gew.%, vorzugsweise 0 bis 1 Gew.%, bezogen auf die Gesamtmenge der eingesetzten Monomeren.

Des weiteren können Monomereinheiten, die Silizium enthalten, wie Acryloxypropyltri(alkoxy)- und Methacryloxypropyltri(alkoxy)-Silane, Vinyltrialkoxysilane, beispielsweise Vinyltrimethoxysilan, Vinyltriethoxysilan, in einer Menge 0 bis 2 Gew.%, vorzugsweise 0 bis 1 Gew.%, bezogen auf die Gesamtmenge der eingesetzten Monomeren, in den Copolymerisaten enthalten sein.

Weitere geeignete Comonomere sind auch mehrfach ethylenisch ungesättigte Monomere wie Divinyladipat, Divinylbenzol, Vinylacrylat, Vinylmethacrylat, Allylacrylat, Allylmethacrylat, Diallylmaleinat und -fumarat, Diallylphthalat, Methylenbisacrylamid, Ethylenglykoldiacrylat, Propylenglykoldiacrylat, 1,3- und 1,4-Butylendiacrylat, 1,6-Hexandioldiacrylat sowie Glyzerintriacrylat.

Als Copolymerisate, welche die genannten aldehyd- und ketofunktionellen Monomeren enthalten, sind die nachfolgend aufgeführten besonders bevorzugt:
Vinylester-Ethylen-Copolymerisate mit einem Ethylengehalt von 1 bis 60 Gew.-%; bevorzugt mit einem Ethylengehalt von 5 bis 50 Gew.-%, wobei als Vinylester bevorzugt Vinylacetat und/oder Versaticsäurevinylester und/oder eines oder mehrere, der bereits genannten Monomeren aus der Gruppe der Vinylester, insbesondere Vinylpivalat, Vinyl-2-ethylhexanoat, Vinyllaurat, enthalten sind.
Vinylester-Ethylen-(Meth)acrylsäureester-Copolymerisate mit einem Ethylengehalt von 1 bis 40 Gew.%, wobei als Vinylester eines oder mehrere, der bereits genannten Monomeren aus der Gruppe der Vinylester, insbesondere Vinylacetat und Versaticsäurevinylester, und 0,1 bis 30 Gew.-% (Meth)acrylsäureester eines oder mehrere, der bereits genannten Monomeren aus der Gruppe der (Meth)acrylsäureester, bevorzugt Methylmethacrylat, n-Butylacrylat, 2-Ethylhexylacrylat, enthalten sind.
Vinylacetat-Copolymerisate mit 0 bis 60 Gew.-% eines oder mehrerer, der bereits genannten Monomeren aus der Gruppe der Vinylester, wobei Vinylpropionat, Vinylbutyrat, Vinylpivalat, Vinyl-2-ethylhexanoat und Versaticsäurevinylester bevorzugt sind.
Vinylester-(Meth)acrylsäureester-Copolymerisate mit 20 bis 90 Gew.-% Vinylester, wobei Vinylpropionat, Vinylbutyrat, Vinylpivalat, Vinyl-2-ethylhexanoat und Versaticsäurevinylester bevorzugt sind, und 0,1 bis 50 Gew.-% eines oder mehrere, der bereits genannten Monomeren aus der Gruppe der (Meth)acrylsäureester, bevorzugt Methylmethacrylat, n-Butylacrylat, 2-Ethylhexylacrylat, enthalten sind.
Vinylester-Copolymerisate mit Estern der Furnar- oder Maleinsäure, wie z.B. deren Diethyl-, Diisopropyl-, Dibutyl-, Dihexyl- und Dioctylester, insbesondere Vinylacetat-Copolymerisate mit 10 bis 70 Gew.-% eines oder mehrere der genannten Fumar- oder Maleinsäureester-Monomeren, welche gegebenenfalls noch weitere Vinylester, wie Versaticsäurevinylester oder Vinyllaurat, und Ethylen enthalten.
(Meth)acrylsäureester-Copolymeristate auf Basis eines oder mehrerer, der bereits genannten Monomeren aus der Gruppe (Meth)acrylsäureeseter, wobei Methylmethacrylat, n-Butylacrylat und 2-Ethylhexylacrylat bevorzugt enthalten sind.
Styrol-(Meth)acrylsäureester-Copolymerisate mit einem Styrol-Gehalt von 0,1 bis 70 Gew.-%, wobei als (Meth)acrylsäureester Methylmethacrylat und/oder n-Butylacrylat und/oder 2-Ethylacrylat bevorzugt sind.
Styrol-Butadien-Copolymerisate mit einem Styrol-Gehalt von 1 bis 70 Gew.-%.
Vinylchlorid-Copolymerisate mit den bereits genannten Vinylestern und/oder Ethylen und/oder (Meth)acrylaten.

Die Herstellung der genannten Copolymerisate erfolgt vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder nach dem Dosierverfahren ohne oder teilweiser Vorlage der Monomeren in offenen Reaktions- oder Druckgefäßen durchgeführt werden. Die aldehyd- und ketofunktionellen Monomere können gegebenenfalls auch erst nach einem Umsatz von 80 bis 100 Gew.-% der erfindungsgemäßen Hauptmonomeren zugegeben bzw. dosiert werden. Alle Dosierungen erfolgen vorzugsweise im Maße des Verbrauchs der jeweiligen Komponente. Bevorzugt wird das Saatlatexverfahren. Hierbei wird ein Teil der gesamten Monomermenge (in der Regel 1 bis 20 %) vorgelegt und nach Zugabe eines Teils der Gesamtinitiatormenge (in der Regel 5 bis 30 %) als Saatlatex vorpolymerisiert. Der Rest des Monomerengemisches sowie die restliche Initiatorlösung werden dann langsam zudosiert.

Die Polymerisation wird vorzugsweise in einem Temperaturbereich von 0 bis 100 °C durchgeführt und mit den für die Emulsionspolymerisation üblicherweise eingesetzten Methoden eingeleitet. Kommen gasförmige Comonomeren, wie z.B. Ethylen oder Vinylchlorid, zum Einsatz, wird unter Druck, im allgemeinen zwischen 2 und 100 bar, gearbeitet. Im Falle von Ethylen können die erfindungsgemäßen Copolymerisate auch in einem mehrstufigen, bevorzugt 2-stufigen, Polylmerisationsverfahren erhalten werden, wobei das Copolymerisat entweder eine erste Ethylenreiche und eine letzte Ethylen-arme Phase oder umgekehrte Phasen besitzt. Die Initiierung erfolgt mittels der üblichen, zumindest teilweise wasserlöslichen Radikalbildner, die vorzugsweise in Mengen von 0,01 bis 3,0 Gew.-%, bezogen auf das Gesamtgewicht der Monomeren, eingesetzt werden. Zur Stabilisierung der erfindungsgemäßen Copolymerisate können alle üblicherweise bei der Emulsionspolymerisation verwendeten Emulgatoren und/oder Schutzkolloide verwendet werden.

Geeignete Schutzkolloide sind teil- und vollverseifte Polyvinylalkohole. Der Polymerisationsgrad der Polyvinylalkohole liegt vorzugsweise bei 200 bis 3500, insbesondere zwischen 500 und 3000. Der Hydrolysegrad beträgt vorzugsweise 80 bis 98 Mol-%, bevorzugt 85 bis 95 Mol-%. Geeignet sind auch teilverseifte, hydrophob modifizierte Polyvinylalkohole mit einem Hydrolysegrad von 80 bis 98 Mol-%, die durch Copolymerisation von Vinylacetat mit hydrophoben Comonomeren, wie z.B. Versaticsäurevinylester, Vinyllaurat, Vinylchlorid, Ethylen, und anschließender Verseifung oder durch polymeranaloge Umsetzung von unmodifiziertem Polyvinylalkohol mit Diketen, Acetessigsäure oder Acetalisierungsagenzien, wie C₁- bis C₄-Aldehyde, vorzugsweise Butyraldehyd, erhältlich sind. Der Anteil der hydrophoben Einheiten beträgt 0,1 bis 10 Gew.%, bezogen auf das Gesamtgewicht des Polyvinylalkohols. Die Polyvinylalkohole können auch mit Sulfonsäure-, Carboxyl- und/oder Aminogruppen funktionalisiert sein. Es können auch Gemische der genannten Polyvinylalkohole verwendet werden. Die Polyvinylalkohol-Menge beträgt 1 bis 20 Gew.-%, bezogen auf das Gesamtgewicht der eingesetzten Monomeren, und wird im allgemeinen bei der Polymerisation zugesetzt. Das Schutzkolloid kann sowohl vollständig vorgelegt, als auch teilweise vorgelegt und teilweise dosiert werden.

Weitere Beispiele für geeignete Schutzkolloide sind veretherte Cellulosederivate, beispielsweise Hydroxyethylcellulose, Methylcellulose, Methylhydroxyethylcellulose, Methylhydroxypropylcellulose, Carboxymethylcellulose, wasserlösliche oder durch Hydrolyse abgebaute Stärken sowie Polyvinylpyrrolidon, Polycarbonsäuren, wie Poly(meth)acrylsäure, wasserlösliche Copolymerisate auf Basis von (Meth)acrylsäure, wie Acrylsäure/Acrylamid- und (Meth)acrylsäure/(Meth)acrylsäureester-Copolymerisate, Poly(meth)acrylamid, Polyvinylsulfonsäuren, Styrol-Maleinsäure-Copolymere oder Casein, Gummiarabicum, Ligninsulfonate und Natriumalginat.

Beispiele für Emulgatoren sind nichtionische und ionische Emulgatoren, wobei diese Costabilisatoren im allgemeinen vor der Polymerisation vorgelegt werden. Deren Mengenanteil kann bis zu 3 Gew.-% betragen, bezogen auf die Gesamtmasse der Monomeren. Als nichtionische Emulgatoren verwendet man beispielsweise Ethoxylierungsprodukte von Propylenoxid; oder Alkylpolyglykolether wie die Ethoxylierungsprodukte von Lauryl-, Oleyl-, Stearyl- oder Kokosfettalkohol, Alkylphenolpolyglykolether wie die Ethoxylierungsprodukte von Octyl- oder Nonylphenol, Diisopropyl-phenol, Triisopropyl-phenol oder von Di- oder Tri-tert.-butylphenol. Als ionische Emulgatoren kommen in erster Linie anionische Emulgatoren in Frage. Es finden dabei die Alkali- oder Ammonium-Salze von Alkyl-, Aryl- oder Alkylarylsulfonsäuren, sowie die entsprechenden Sulfate, Phosphate oder Phosphonate Verwendung, die auch Oligo- oder Polyethylenoxid-Einheiten zwischen dem Kohlenwasserstoffrest und der anionischen Gruppe enthalten können. Typische Beispiele sind Natriumlaurylsulfat, Natriumoctylphenolglykolethersulfate, Natriumdodecylbenzolsulfonat, Natriumlauryldiglykolsulfat, Ammonium-tri-ter.-butylphenolpentaglykolsulfat oder -octaglykolsufat.

Als Radikalbildner für die Polymerisation der Comonomeren können alle radikalbildenden Polymerisationsinitiatoren in den üblichen Mengen eingesetzt werden. Geeignete Initiatoren sind beispielsweise Alkali- und Ammonium-Salze der Peroxysäuren, wie Kalium-, Natrium- und Ammoniumpersulfat, sowie Redoxkatalysatoren, beispielsweise Kombinationen aus Natriumpersulfat und Natriumsulfit oder Wasserstoffperoxid und Ascorbinsäure oder Wasserstoffperoxid und Eisen-(II)-Salzen, sowie tert.-Butylhydroperoxid und NatriumFormaldehydsulfoxylat. Weiterhin können auch organische Peroxide, Percarbonate und Azoverbindungen eingesetzt werden, vorzugsweise Dibenzoylperoxid, Azoisobutyronitril, 2,2'-Azobis(2-methylpropionamidin)-dihydrochlorid, tert.-Butylperoxydiethylacetat und tert.-Butylperoxy-2-ethylhexanoat. Die Menge der eingesetzten Initiatoren liegt bei 0,1 bis 2 Gew.-%, vorzugsweise 0,1 bis 1 Gew.-%, bezogen auf die Monomeren. Die aufgeführten Initiatoren können auch in Mischung verwendet werden.

Das Molekulargewicht der Copolymerisate kann durch Zusatz von regelnden Substanzen während der Polymerisation gesteuert werden. Beispiele solcher Regler sind n-Dodecyl- und tert.-Dodecylmercaptan, Mercaptopropionsäure und deren Ester, Isopropanol. Falls regelnde Substanzen zum Einsatz kommen, werden diese üblicherweise in Mengen zwischen 0,01 bis 0,5 Gew.%, bezogen auf die Monomeren, dosiert.

Zusätzlich können noch übliche Zusatzstoffe, beispielsweise Entschäumer, bei der Polymerisation zugesetzt werden. Geeignete Entschäumer sind z. B. solche auf Silikon- oder auf Kohlenwasserstoffbasis.

Die Teilchengröße der Polymerpartikel der erfindungsgemäßen Copolymerisate liegt in der Dispersionsform im Bereich von 0,02 bis 15 µm, vorzugsweise im Bereich von 0,1 bis 12 µm. Der Feststoffgehalt der Dispersionen beträgt vorzugsweise 40 bis 65 Gew.-%, besonders bevorzugt 45 bis 60 Gew.-%.

Die Copolymerisate können eine Glasübergangstemperatur im Bereich von -50 bis +60 °C, bevorzugt -40 bis + 40 °C, besitzen.

Die Herstellung der erfindungsgemäßen Dispersionspulver erfolgt bevorzugt über Sprühtrocknung in üblichen Sprühtrocknungsanlagen, wobei die Zerstäubung mittels Ein-, Zwei-, oder Mehrstoffdüsen oder mit einer rotierenden Scheibe erfolgen kann. Die Austrittstemperatur wird im allgemeinen im Bereich von 50 bis 100°C, vorzugsweise 60 bis 90°C, je nach Anlage, Glastemperatur des Copolymerisats und gewünschtem Trocknungsgrad, gewählt. Zur Sprühtrocknung wird die Dispersion des Copolymerisats gegebenenfalls mit Schutzkolloiden versprüht und getrocknet. Als Schutzkolloide werden bevorzugt 0 bis 20 Gew.-% oben aufgeführter Schutzkolloid-Polymeren, bezogen auf das Copolymerisat, in Form einer wässrigen Lösung vor dem Sprühtrocknen zugesetzt.

Zur Erhöhung der Lagerstabilität und der Rieselfähigkeit des Dispersionspulvers werden vorzugsweise ein oder mehrere Antibackmittel parallel zur Dispersion in den Sprühturm eingebracht, so dass es zu einer bevorzugten Ablagerung der Antibackmittel auf den Dispersionsteilchen kommt. Das erhaltene Pulver kann einen Gehalt an Antibackmittel bis 30 Gew.-%, vorzugsweise bis 22 Gew.-%, bezogen auf das Gesamtgewicht polymerer Bestandteile, besitzen. Beispiele für Antibackmittel sind Kieselsäure, Talk, Ca- bzw. Mg-Carbonat, Kaoline und Silikate mit mittleren Teilchengrößen in einem bevorzugten Bereich von 0,1 µm bis 100 µm.

Zur Verbesserung von anwendungstechnischen Eigenschaften können vor und während der Versprühung weitere Zusätze zugegeben werden, beispielsweise Pigmente, Füllstoffe, Schaumstabilisatoren, Hydrophobierungsmittel, Katalysatoren, Rheologiehilfsmittel, z. B. Verlaufsmittel und Verdickungsmittel, Haftmittel, Weichmacher, Koaleszenzmittel, Emulgatoren, Zementabbindebeschleuniger und -verzögerer.

Die beschriebenen Dispersionspulver sind insbesondere bei der Herstellung von Wärmedämm-Verbundsystemen vorteilhaft, die zur Wärmedämmung Schaumkunststoffe, bevorzugt in Form von expandierten Polystyrolplatten, enthalten.

Zur Herstellung der Wärmedämm-Verbundkleber und Armierungsmörtel werden die Dispersionspulver mit weiteren Rezepturbestandteilen wie Füllstoffe, Zement und weiteren Zuschlagstoffen in geeigneten Mischern homogenisiert. Vorzugsweise wird eine Trockenmischung hergestellt und das zur Verarbeitung erforderliche Anmachwasser unmittelbar vor der Applikation hinzugefügt. Die erfindungsgemäßen Dispersionspulver eignen sich auch zur Verwendung in Rezepturen von zementfreien Wärmedämm-Verbundklebern und Armierungsmassen.

Bevorzugte Verbundkleber enthalten 5 bis 80 Gew.-% Füllstoffe, wie Quarzsand und/oder Ca- bzw. Mg-Carbonat und/oder Leichtfüllstoffe, wie Perlite und geblähter Ton, 5 bis 80 Gew.-% mineralische Bindemittel, wie Zement und/oder Ca(OH)₂, 0,5 bis 50 Gew.-% Schutzkolloid-stabilisierte Dispersionspulver, 0,1 bis 2 Gew.-% Verdickungsmittel wie Celluloseether, Polyacrylate und Schichtsilikate, und gegebenenfalls weitere Zusatzstoffe zur Verbesserung der Applikationseigenschaften, wie Standfestigkeit, Verarbeitbarkeit, offene Zeit, und der Wasserfestigkeit.

Die folgenden Beispiele dienen der näheren Erläuterung der Erfindung. Die angegebenen Teile und Prozente beziehen sich auf das Gewicht, soweit nicht anders vermerkt.

### Ausführungsbeispiele:

Die Beispiele und Vergleichsbeispiele wurden in einem 30 I-Druckautoklaven mit Mantelkühlung und zugelassenem Druckbereich bis 60 bar ausgeführt.

Die Viskosität der Dispersionen wurde mit einem Haake-Rotationsviskosimeter (Rheomat® VT 500) bei einem Schergefälle von D = 386,6 s⁻¹ ermittelt.

Die Teilchengrößenverteilung wurde mittels einer kombinierten Laserbeugungs- und Laserstreumethode (Master-Sizer Micro Plus; polydisperse Mie-Auswertung; Brechungsindex für Vinylacetat/Ethylen-Copolymerisate n_{D}²⁰=1,456; Hersteller:Malvern) bestimmt.

Die Bestimmung der Glasübergangstemperaturen erfolgt durch DSC-Messung auf einer Perkin-Elmer 7-Einheit mit einer Aufheizrate von 20K/min.

### Beispiel 1:

In ein 30 I-Druckreaktionsgefäß mit Temperaturregeleinrichtung und Rührwerk wird eine wässrige Lösung aus 1200 g Polyvinylalkohol mit einer Viskosität der 4 %-igen wässrigen Lösung bei 20 °C von ca. 4 mPa•s und einem Verseifungsgrad von ca. 88 Mol-%, 39,0 g wasserfreiem Natriumacetat, 11,1g Natriumlaurylsulfat, 29,0 g ^{®}Genapol PF20 (Hersteller: Clariant) und 11700 g Wasser gegeben.
Der Reaktor wird mit Stickstoff und Ethylen gespült, um weitgehend allen Sauerstoff zu entfernen. Anschließend wird das Rührwerk auf 120 U/min. eingestellt, und dem Ansatz werden 900 g Vinylacetat und 20,8 g Acetoacetoxyethylmethacrylat zugegeben. Nach Erwärmung des Kesselinhalts auf 70 °C wird rasch eine Lösung von 1,8 g Natriumpersulfat in 90 g Wasser zugegeben und die Temperatur auf 80 °C erhöht. Während des Aufheizvorgangs wird Ethylen bis zu einem Druck von 35 bar zugegeben.
Nach Reaktionsstart wird mit der 4-stündigen, parallelen Dosierung von 10363 g Vinylacetat und 239,2 g Acetoacetoxyethylmethacrylat (Monomermischung) und einer Initiatorlösung aus 14,2 g Natriumpersulfat und 713 g Wasser bei einer Innentemperatur von 80 °C und einem Ethylendruck von 35 bar begonnen. Drei Stunden nach Dosierbeginn wird die Ethylen-Zufuhr gestoppt. Nach beendeter Dosierung wird eine Lösung von 1,8 g Natriumpersulfat und 90 g Wasser rasch zugegeben. Dann wird der Ansatz noch weitere 60 Minuten bei einer Temperatur von 80 °C gehalten. Anschließend wird auf Raumtemperatur abgekühlt.

Charakteristische Daten:
Feststoff: 51,0 %
pH-Wert: 4,9
Viskosität: 1080 mPa•s
Teilchengrößenverteilung: 0,1 bis 20 µm; d_{w}= 1,42 µm; d_{w}/dₙ=10,1
Glasübergangstemperatur: 17°C

1000 Teile der Carbonylgruppen-haltigen Dispersion werden mit 116 Teilen einer 25 % -igen Polyvinylalkohollösung (Viskosität der 4 %-igen Lösung ca. 4 mPa•s, Verseifungsgrad von ca. 88 Mol-%) unter Rühren versetzt und anschließend, wie weiter unten beschrieben, sprühgetrocknet.

### Beispiel 2:

In ein 30 I-Druckreaktionsgefäß mit Temperaturregeleinrichtung und Rührwerk wird eine wässrige Lösung aus 1200 g Polyvinylalkohol mit einer Viskosität der 4 %-igen wässrigen Lösung bei 20 °C von ca. 4 mPa•s und einem Verseifungsgrad von ca. 88 Mol-%, 39,0 g wasserfreiem Natriumacetat, 11,1 g Natriumlaurylsulfat, 29,0 g ^{®}Genapol PF20 (Hersteller: Clariant) und 11700 g Wasser gegeben.
Der Reaktor wird mit Stickstoff und Ethylen gespült, um weitgehend allen Sauerstoff zu entfernen. Anschließend wird das Rührwerk auf 120 U/min. eingestellt, und dem Ansatz werden 900 g Vinylacetat und 31,2 g Acetoacetoxyethylmethacrylat zugegeben. Nach Erwärmung des Kesselinhalts auf 70 °C wird rasch eine Lösung von 1,8 g Natriumpersulfat in 90 g Wasser zugegeben und die Temperatur auf 80 °C erhöht. Während des Aufheizvorgangs wird Ethylen bis zu einem Druck von 35 bar zugegeben.
Nach Reaktionsstart wird mit der 4-stündigen, parallelen Dosierung von 10363 g Vinylacetat und 358,8 g Acetoacetoxyethylmethacrylat (Monomermischung) und einer Initiatorlösung aus 14,2 g Natriumpersulfat und 713 g Wasser bei einer Innentemperatur von 80 °C und einem Ethylendruck von 35 bar begonnen. Drei Stunden nach Dosierbeginn wird die Ethylen-Zufuhr gestoppt. Nach beendeter Dosierung wird eine Lösung von 1,8 g Natriumpersulfat und 90 g Wasser rasch zugegeben. Dann wird der Ansatz noch weitere 60 Minuten bei einer Temperatur von 80 °C gehalten. Anschließend wird auf Raumtemperatur abgekühlt.

Charakteristische Daten:
Feststoff: 51,1 %
pH-Wert: 5,0
Viskosität: 840 mPa·s
Teilchengrößenverteilung: 0,1 bis 20 µm; d_{w}= 1,78 µm; d_{w}/dₙ=12,7
Glasübergangstemperatur: 18 °C

1000 Teile der Carbonylgruppen-haltigen Dispersion werden mit 116 Teilen einer 25 %-igen Polyvinylalkohollösung (Viskosität der 4 %-igen Lösung ca. 4 mpa•s, Verseifungsgrad von ca. 88 Mol-%) unter Rühren versetzt und anschließend, wie unten beschrieben sprühgetrocknet.

### Beispiel 3

In ein 30 l -Druckreaktionsgefäß mit Temperaturregeleinrichtung und Rührwerk wird eine wässrige Lösung aus 1200 g Polyvinylalkohol mit einer Viskosität der 4 %-igen wässrigen Lösung bei 20 °C von ca. 4 mPa•s und einem Verseifungsgrad von ca. 88 Mol%, 39,0 g wasserfreiem Natriumacetat, 11,1 g Natriumlaurylsulfat, 29,0 g ^{®}Genapo) PF20 (Hersteller: Clariant) und 11700 g Wasser gegeben.

Der Reaktor wird mit Stickstoff und Ethylen gespült, um weitgehend allen Sauerstoff zu entfernen. Anschließend wird das Rührwerk auf 120 U/min. eingestellt, und dem Ansatz werden 900 g Vinylacetat und 31,2 g Diacetonacrylamid zugegeben. Nach Erwärmung des Kesselinhalts auf 70 °C wird rasch eine Lösung von 1,8 g Natriumpersulfat in 90 g Wasser zugegeben und die Temperatur auf 80 °C erhöht. Während des Aufheizvorgangs wird Ethylen bis zu einem Druck von 35 bar zugegeben.
Nach Reaktionsstart wird mit der 4-stündigen, parallelen Dosierung von 10363 g Vinylacetat und 358,8 g Diacetonacrylamid (Monomermischung) und einer Initiatorlösung aus 14,2 g Natriumpersulfat und 713 g Wasser bei einer Innentemperatur von 80 °C und einem Ethylendruck von 35 bar begonnen. Drei Stunden nach Dosierbeginn wird die Ethylen-Zufuhr gestoppt. Nach beendeter Dosierung wird eine Lösung von 1,8 g Natriumpersulfat und 90 g Wasser rasch zugegeben. Dann wird der Ansatz noch weitere 60 Minuten bei einer Temperatur von 80 °C gehalten. Anschließend wird auf Raumtemperatur abgekühlt.

Charakteristische Daten:
Feststoff: 53,2 %
pH-Wert: 4,6
Viskosität: 698 mPa·s
Teilchengrößenverteilung: 0,1 bis 20 µm; d_{w} 0,87 µm; d_{w}/dₙ 7,9
Glasübergangstemperatur: 18 °C

1000 Teile der Carbonylgruppen-haltigen Dispersion werden mit 116 Teilen einer 25 % igen Polyvinylalkohollösung (Viskosität der 4 %-igen Lösung ca. 4 mPa•s, Verseifungsgrad von ca. 88 Mol%) unter Rühren versetzt und anschließend sprühgetrocknet.

### Vergleichsbeispiel 1:

In ein 30 I-Druckreaktionsgefäß mit Temperaturregeleinrichtung und Rührwerk wird eine wässrige Lösung aus 1200 g Polyvinylalkohol mit einer Viskosität der 4 %-igen wässrigen Lösung bei 20 °C von ca. 4 mPa•s und einem Verseifungsgrad von ca. 88 Mol-%, 39,0 g wasserfreiem Natriumacetat, 11,1 g Natriumlaurylsulfat, 29,0 g ^{®}Genapol PF20 (Hersteller: Clariant) und 8700 g Wasser gegeben.
Der Reaktor wird mit Stickstoff und Ethylen gespült, um weitgehend allen Sauerstoff zu entfernen. Anschließend wird das Rührwerk auf 120 U/min eingestellt und dem Ansatz werden 900 g Vinylacetat zugegeben. Nach Erwärmung des Kesselinhalts auf 70 °C wird rasch eine Lösung von 1,8 g Natriumpersulfat in 90 g Wasser zugegeben und die Temperatur auf 80 °C erhöht. Während des Aufheizvorgangs wird Ethylen bis zu einem Druck von 35 bar zugegeben.
Nach Reaktionsstart wird mit der 4-stündigen, parallelen Dosierung von 10363 g Vinylacetat und einer Initiatorlösung aus 14,2 g Natriumpersulfat und 713 g Wasser bei einer Innentemperatur von 80 °C und einem Ethylendruck von 35 bar begonnen. Drei Stunden nach Dosierbeginn wird die Ethylen-Zufuhr gestoppt. Nach beendeter Dosierung wird eine Lösung von 1,8 g Natriumpersulfat und 90 g Wasser rasch zugegeben. Dann wird der Ansatz noch weitere 60 Minuten bei einer Temperatur von 80 °C gehalten. Anschließend wird auf Raumtemperatur abgekühlt.

Charakteristische Daten:
Feststoff: 58,0 %
pH-Wert: 4,9
Viskosität: 3040 mPa•s
Teilchengrößenverteilung: 0,05 bis 20 µm; d_{w}= 0,92 µm; d_{w}/dₙ=8,4
Glasübergangstemperatur: 11 °C

1000 Teile der Dispersion werden mit 116 Teilen einer 25 %-igen Polyvinylalkohollösung (Viskosität der 4 %-igen Lösung ca. 4 mPa•s, Verseifungsgrad von ca. 88 Mol-%) unter Rühren versetzt und anschließend, wie unten beschrieben sprühgetrocknet.

### Sprühtrocknung:

Nach Zusatz der Polyvinylalkohollösung werden die entsprechend modifizierten Dispersionen auf einen Feststoffgehalt von 40 Gew.-% mit Wasser verdünnt und unter Zugabe einer Antibackmittel-Kombination aus Talk und Dolomit sprühgetrocknet (Sprühtrockner der Fa. Niro, Eingangstemperatur: ca. 130 °C, Ausgangstemperatur: ca. 65 °C, Durchsatz: ca. 1000 g Dispersion/h). Der Antibackmittel-Gehalt beträgt 15 Gew.-%.

### Anwendungstechnische Ausprüfung:

Die Untersuchung der Haftzugfestigkeiten von Wärmedämm-Verbundklebern erfolgte gemäß der Leitlinie für Europäische Technische Zulassungen für "Außenseitige Wärmedämm-Verbundsystem mit Putzschicht", ETAG Nr. 004, Ausgabe März 2000 (nachfolgend als EOTA-Leitlinie bezeichnet).

Es wurde ein Premix aus 30 % Portlandzement CEM I 32,5 R, 38,8 % Quarzsand F34, 21 % Quarzsand F31, 10 % Calciumcarbonat (Partikeldurchmesser d₅₀= 10 µm) und 0,2 Gew.-% ®Tylose MH 15002 P6 (Hersteller: Clariant) hergestellt. 97 Teile Premix wurden dann mit 3 Teilen des Dispersionspulvers trocken vorgemischt und mit ca. 20 Teilen Wasser unter einem Rührer 1 min bei hoher Schergeschwindigkeit angerührt. Der Kleber wurde anschließend entsprechend der EOTA-Leitlinie appliziert, die entsprechenden Prüfkörper unter definierten Bedingungen (siehe unten) gelagert und die Haftzugfestigkeit zwischen Kleber und Wärmedämmstoff sowie, im Falle der Nasslagerung, die minimale Klebefläche bestimmt. Als Wärmedämmstoff wurde Platten aus expandiertem Polystyrol verwendet.

Tabelle 1 zeigt die Resultate der Haftzugfestigkeitsprüfung.

**Tabelle 1**

| **Beispiel** | **Haftzugfestigkeit in N/mm²** | | **Ausriss an Klebefläche in %** | |
|---|---|---|---|---|
| | Lagerung A | Lagerung B | Lagerung A | Lagerung B |
| Bsp. 1 | 0,168 | 0,088 | 100 | 40 |
| Bsp. 2 | 0,144 | 0,077 | 100 | 100 |
| Bsp. 3 | 0,149 | 0,092 | 100 | 90 |
| Vergleich 1 | 0,170 | 0,079 | 100 | 20 |

| | | | | |
|---|---|---|---|---|
| Lagerung A: 28 d bei 23 °C und 50 % rel. Luftfeuchte Lagerung B: a) 28 d bei 23 °C und 50 % rel. Luftfeuchte b) 2 d Wasserlagerung c) 2 h Trocknung bei 23°C und 50 % rel. Luftfeuchte | | | | |

## Patentansprüche

1. Verwendung von in Wasser redispergierbaren Dispersionspulvem auf Basis von ein oder mehreren, mit mindestens einem Schutzkolloid stabilisierten Copolymeren bei der Herstellung von Wärmedämm-Verbundsystemen, wobei das oder die Copolymere carbonylgruppenhaltige Monomere enthalten, wobei die carbonylgruppenhaltigen Monomere mindestens eine Carbonylgruppe ausgewählt aus der Gruppe der Aldehyd- und Ketogruppen umfasst.

2. Verwendung von in Wasser redispergierbaren Dispersionspulvern gemäß dem vorhergehenden Anspruch, **dadurch gekennzeichnet, dass** die carbonylgruppenhaltigen Monomere aus der Gruppe Acrolein, Vinylacetoacetat, Allylacetoacetat, Diacetonacrylamid, Vinylmethlylketon, der acetoacetylierte Hydroxyalkylacrylate und der acetoacetylierte Hydroxyalkylmethacrylate ausgewählt sind.

3. Verwendung von in Wasser redispergierbaren Dispersionspulvern gemäß einem der vorhergehenden Ansprüche, **dadurch gekennzeichnet, dass** das oder die Copolymere 0,1 bis 15 Gew.-%, bezogen auf das Gesamtgewicht des Polymerisats carbonylgruppenhaltige Monomere enthalten.

4. Verwendung von in Wasser redispergierbaren Dispersionspulvern gemäß einem der vorhergehenden Ansprüche, **dadurch gekennzeichnet, dass** das oder die Copolymere als Basismonomer mindestens ein Monomer ausgewählt aus der Gruppe der Vinylester, Vinylaromaten, Acrylsäureester, Methacrylsäureester, Fumarsäureester und Maleinsäureester enthält.

5. Verwendung von in Wasser redispergierbaren Dispersionspulvern gemäß einem der vorhergehenden Ansprüche, **dadurch gekennzeichnet, dass** das oder die Copolymere, neben den genannten Monomeren weitere Monomere ausgewählt aus der Gruppe der Methacrylsäure- und Acrylsäureester, die mit Epoxidgruppen oder Hydroxylgruppen modifiziert sind, sowie der Anhydride der Acryl- und Methacrylsäure, der Amide der Acryl- und Methacrylsäure sowie deren Isobutoxyether und n-Butoxyether, der ethylenisch ungesättigten Mono- und Dicarbonsäuren, deren Anhydride und Amide, der ethylenisch ungesättigte Sulfonsäuren und deren Salze, der Vinylsulfonsäuren, der Vinylchloride, der ein oder mehrfach ungesättigten Olefine und der Acryloxypropyltri(alkoxy)-Silane, Methacryloxypropyltri(alkoxy)-Silane Vinyltrialkoxysilane, enthalten.

6. Verwendung von in Wasser redispergierbaren Dispersionspulvem gemäß einem der vorhergehenden Ansprüche, **dadurch gekennzeichnet, dass** das oder die Copolymere ausgewählt sind aus der Gruppe der
Vinylester-Ethylen-Copolymerisate mit einem Ethylengehalt von 1 bis 60 Gew.-%,
Vinylester-Ethylen-(Meth)acrylsäureester-Copolymerisate mit einem Ethylengehalt von 1 bis 40 Gew.-% und einem (Meth)acrylsäureestergehalt von 0,1 bis 30 Gew. -%,
Vinylacetat-Copolymerisate mit 0 bis 60 Gew.-% eines oder mehrerer Monomeren aus der Gruppe der Vinylester,
Vinylester-(Meth)acrylsäureester-Copolymerisate mit 20 bis 90 Gew.-% Vinylester und 0,1 bis 50 Gew.-% eines oder mehrerer Monomeren aus der Gruppe der (Meth)acrylsäureester,
Vinylester-Copolymerisate mit Estern der Furnar- oder Maleinsäure, (Meth)acrylsäureester-Copolymeristate auf Basis eines oder mehrerer Monomeren aus der Gruppe (Meth)acrylsäureeseter,
Styrol-(Meth)acrylsäureester-Copolymerisate mit einem Styrol-Gehalt von 0,1 bis 70 Gew.-%,
Styrol-Butadien-Copolymerisate mit einem Styrol-Gehalt von 1 bis 70 Gew.-%,
Vinylchlorid-Copolymerisate mit Vinylestern und/oder Ethylen und/oder (Meth)acrylaten,
wobei diese Copolymere weitere carbonylgruppenhaltige Monomere enthalten, die mindestens eine Carbonylgruppe, ausgewählt aus der Gruppe der Aldehyd- und Ketogruppen, besitzen.

7. Verwendung von in Wasser redispergierbaren Dispersionspulvern gemäß einem der vorhergehenden Ansprüche, **dadurch gekennzeichnet, dass** ein Polyvinylalkohol als Schutzkolloid enthalten ist.

8. Verwendung von in Wasser redispergierbaren Dispersionspulvern gemäß einem der vorhergehenden Ansprüche bei der Herstellung von wärmedämmenden Schaumstoff-Verbundsystemen.

9. Verwendung von in Wasser redispergierbaren Dispersionspulvem gemäß dem vorhergehenden Anspruch bei der Herstellung von wärmedämmenden Polystyrolplatten-Verbundsystemen.

10. Verbundkleber enthaltend
5 bis 80 Gew.-% Füllstoffe und/oder Leichtfüllstoffe,
5 bis 80 Gew.-% mineralische Bindemittel,
0,5 bis 50 Gew.-% gemäß einem der in den Ansprüche 1 bis 8 verwendeten Schutzkolloid-stabilisierte Dispersionspulver und
0,1 bis 2 Gew.-% Verdickungsmittel.

## Claims

1. The use of water-redispersible dispersion powders based on one or more copolymers which are stabilized with at least one protective colloid in the production of composite thermal insulation systems, wherein the copolymer or copolymers contain(s) monomers containing carbonyl groups, wherein the monomers containing carbonyl groups have at least one carbonyl group selected from the group consisting of aldehyde and keto groups.

2. The use of water-redispersible dispersion powders as claimed in the preceding claim, wherein the monomers containing carbonyl groups are selected from the group consisting of acrolein, vinyl acetoacetate, allyl acetoacetate, diacetoneacrylamide, vinyl methyl ketone, acetoacetylated hydroxyalkyl acrylates and acetoacetylated hydroxyalkyl methacrylates.

3. The use of water-redispersible dispersion powders as claimed in any of the preceding claims, wherein the copolymer or copolymers contain(s) from 0.1 to 15% by weight, based on the total weight of the polymer, of monomers containing carbonyl groups.

4. The use of water-redispersible dispersion powders as claimed in any of the preceding claims, wherein the copolymer or copolymers comprise(s) at least one monomer selected from the group consisting of vinyl esters, vinylaromatics, acrylic esters, methacrylic esters, fumaric esters and maleic esters as base monomer.

5. The use of water-redispersible dispersion powders as claimed in any of the preceding claims, wherein the copolymer or copolymers comprise(s), in addition to the monomers mentioned, further monomers selected from the group consisting of methacrylic and acrylic esters which are modified with epoxide groups or hydroxyl groups and the anhydrides of acrylic and methacrylic acids, the amides of acrylic and methacrylic acids and their isobutoxy ethers and n-butoxy ethers, ethylenically unsaturated monocarboxylic and dicarboxylic acids, their anhydrides and amides, ethylenically unsaturated sulfonic acids and their salts, vinylsulfonic acids, vinyl chlorides, monounsaturated or polyunsaturated olefins and acryloxypropyltri(alkoxy)silanes, methacryloxypropyltri(alkoxy)silanes, vinyltrialkoxysilanes.

6. The use of water-redispersible dispersion powders as claimed in any of the preceding claims, wherein the copolymer or copolymers is/are selected from the group consisting of
vinyl ester-ethylene copolymers having an ethylene content of from 1 to 60% by weight,
vinyl ester-ethylene-(meth)acrylic ester copolymers having an ethylene content of from 1 to 40% by weight and a (meth)acrylic ester content of from 0.1 to 30% by weight,
vinyl acetate copolymers containing from 0 to 60% by weight of one or more monomers from the group consisting of vinyl esters,
vinyl ester-(meth)acrylic ester copolymers comprising from 20 to 90% by weight of vinyl esters and from 0.1 to 50% by weight of one or more monomers from the group consisting of (meth)acrylic esters,
vinyl ester copolymers with esters of fumaric or maleic acid,
(meth)acrylic ester copolymers based on one or more monomers from the group consisting of (meth)acrylic esters,
styrene-(meth)acrylic ester copolymers having a styrene content of from 0.1 to 70% by weight,
styrene-butadiene copolymers having a styrene content of from 1 to 70% by weight,
vinyl chloride copolymers with vinyl esters and/or ethylene and/or (meth)acrylates,
and these copolymers contain further monomers containing carbonyl groups, which monomers have at least one carbonyl group selected from the group consisting of aldehyde and keto groups.

7. The use of water-redispersible dispersion powders as claimed in any of the preceding claims, wherein a polyvinyl alcohol is present as protective colloid.

8. The use of water-redispersible dispersion powders as claimed in any of the preceding claims in the production of thermally insulating foam composite systems.

9. The use of water-redispersible dispersion powders as claimed in the preceding claim in the production of thermally insulating polystyrene board composite systems.

10. Adhesive comprising
from 5 to 80% by weight of fillers and/or lightweight fillers,
from 5 to 80% by weight of mineral binders,
from 0.5 to 50% by weight of dispersion powders which are stabilized with protective colloids and are used as claimed in any of claims 1 to 8 and
from 0.1 to 2% by weight of thickeners.

## Revendications

1. Utilisation de poudres de dispersion redispersibles dans l'eau à base d'un ou plusieurs copolymères stabilisés avec au moins un colloïde protecteur pour la fabrication de systèmes composites d'isolation thermique, dans laquelle le ou les copolymères contiennent des monomères contenant des groupes carbonyle, dans lesquels les monomères contenant des groupes carbonyle comprennent au moins un groupe carbonyle choisi dans le groupe constitué par les groupes aldéhyde et cétone.

2. Utilisation de poudres de dispersion redispersibles dans l'eau selon la revendication précédente, **caractérisée en ce que** les monomères contenant des groupes carbonyle sont choisis dans le groupe constitué par l'acroléine, l'acétoacétate de vinyle, l'acétoacétate d'allyle, le diacétonacrylamide, la vinylméthylcétone, les acrylates d'hydroxyalkyle acétoacétylés et les méthacrylates d'hydroxyalkyle acétoacétylés.

3. Utilisation de poudres de dispersion redispersibles dans l'eau selon l'une quelconque des revendications précédentes, **caractérisée en ce que** le ou les copolymères contiennent 0,1% à 15% en poids, par rapport au poids total du polymère, de monomères contenant des groupes carbonyle.

4. Utilisation de poudres de dispersion redispersibles dans l'eau selon l'une quelconque des revendications précédentes, **caractérisée en ce que** le ou les copolymères contiennent, en tant que monomère de base, au moins un monomère choisi dans le groupe constitué par les esters vinyliques, les composés vinylaromatiques, les esters de l'acide acrylique, les esters de l'acide méthacrylique, les esters de l'acide fumarique et les esters de l'acide maléique.

5. Utilisation de poudres de dispersion redispersibles dans l'eau selon l'une quelconque des revendications précédentes, **caractérisée en ce que** le ou les copolymères contiennent, en plus des monomères mentionnés, d'autres monomères choisis dans le groupe constitué par les esters de l'acide méthacrylique et de l'acide acrylique, qui ont été modifiés par des groupes époxyde ou hydroxyle, ainsi que les anhydrides de l'acide acrylique et de l'acide méthacrylique, les amides de l'acide acrylique et de l'acide méthacrylique ainsi que leurs éthers isobutoxylique et n-butoxylique, les acides mono- et di-carboxyliques à insaturation éthylénique, leurs anhydrides et amides, les acides sulfoniques à insaturation éthylénique et leurs sels, les acides vinylsulfoniques, les chlorures de vinyle, les oléfines mono- ou poly-insaturées et les acryloxypropyltri(alcoxy)-silanes, les méthacryloxypropyltri(alcoxy)-silanes, les vinyltrialcoxysilanes.

6. Utilisation de poudres de dispersion redispersibles dans l'eau selon l'une quelconque des revendications précédentes, **caractérisée en ce que** le ou les copolymères sont choisis dans le groupe constitué par
les copolymères ester vinylique/éthylène ayant une teneur en éthylène de 1 % à 60% en poids,
les copolymères ester vinylique/éthylène/ester d'acide méthacrylique ayant une teneur en éthylène de 1 % à 40% en poids et une teneur en ester d'acide (méth)acrylique de 0,1% à 30% en poids,
les copolymères d'acétate de vinyle contenant 0% à 60% en poids d'un ou plusieurs monomères choisis dans le groupe constitué par les esters vinyliques,
les copolymères ester vinylique/ester d'acide méthacrylique contenant 20% à 90% en poids d'ester vinylique et 0,1% à 50% en poids d'un ou plusieurs monomères choisis dans le groupe constitué par les esters d'acide (méth)acrylique,
les copolymères d'ester vinylique avec des esters de l'acide fumarique ou de l'acide maléique,
les copolymères d'ester d'acide méthacrylique à base d'un ou plusieurs monomères choisis dans le groupe constitué par les esters d'acide méthacrylique,
les copolymères styrène/ester d'acide méthacrylique ayant une teneur en styrène de 0,1 % à 70% en poids,
les copolymères styrène/butadiène ayant une teneur en styrène de 1% à 70% en poids,
les copolymères de chlorure de vinyle avec des esters vinyliques et/ou de l'éthylène et/ou des méthacrylates,
dans laquelle ces copolymères contiennent d'autres monomères contenant des groupes carbonyle qui contiennent au moins un groupe carbonyle choisi dans le groupe constitué par les groupes aldéhyde et cétone.

7. Utilisation de poudres de dispersion redispersibles dans l'eau selon l'une quelconque des revendications précédentes, **caractérisée en ce qu'**elles contiennent un alcool de polyvinyle en tant que colloïde protecteur.

8. Utilisation de poudres de dispersion redispersibles dans l'eau selon l'une quelconque des revendications précédentes pour la fabrication de systèmes composites d'isolation thermique.

9. Utilisation de poudres de dispersion redispersibles dans l'eau selon l'une quelconque des revendications précédentes pour la fabrication de systèmes composites d'isolation thermique par plaques de polystyrène.

10. Colle composite contenant
5% à 80% de charges et/ou de charges légères,
5% à 80% en poids de liants minéraux,
0,5% à 50% en poids de la poudre de dispersion stabilisée avec un colloïde protecteur utilisée selon l'une quelconque des revendications 1 à 8 et
0, 1 % à 2% d'épaississant.
